(19) Europäisches Patentamt
European Patent Office
Office européen des brevets

(11) Veröffentlichungsnummer: **0 012 205**
**B1**

(12) # EUROPÄISCHE PATENTSCHRIFT

(45) Veröffentlichungstag der Patentschrift: **01.02.84**

(51) Int. Cl.³: **C 08 G 12/40**, C 09 D 3/50, C 09 D 5/08

(21) Anmeldenummer: **79104223.7**

(22) Anmeldetag: **31.10.79**

(54) **Verfahren zur Herstellung von chemisch gebundene saure Phosphorsäurederivate enthaltenden Bindemitteln für Einkomponentenlacke.**

(30) Priorität: **14.11.78 AT 8124/78**

(43) Veröffentlichungstag der Anmeldung: **25.06.80 Patentblatt 80/13**

(45) Bekanntmachung des Hinweises auf die Patenterteilung: **01.02.84 Patentblatt 84/5**

(84) Benannte Vertragsstaaten: **BE CH DE FR GB IT NL SE**

(56) Entgegenhaltungen:
**CA - A - 917 334**
**DE - A - 2 144 645**
**DE - A - 2 241 715**
**NL - A - 7 603 497**
**US - A - 3 423 369**
**US - A - 3 440 201**

**Die Akte enthält technische Angaben, die nach dem Eingang der Anmeldung eingereicht wurden und die nicht in dieser Patentschrift enthalten sind.**

(73) Patentinhaber: **Vianova Kunstharz Aktiengesellschaft, A-8402 Werndorf (AT)**

(72) Erfinder: **Behmel, Klaus, Dr., Wenisbucherstrasse 66, A-8044 Graz (AT)**

(74) Vertreter: **Blum, Rudolf Emil Ernst et al, c/o E. Blum & Co Patentanwälte Vorderberg 11, CH-8044 Zürich (CH)**

**EP 0 012 205 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von chemisch gebundene saure Phosphorsäurederivate enthaltenden Bindemitteln für Einkomponentenlacke

Die vorliegenden Erfindung betrifft ein Verfahren zur Herstellung von Bindemitteln für wärmehärtbare Einkomponentenlacke, welche chemisch gebundene saure Phosphorsäurederivate enthalten, welche neben Grundierungen und Füllern auch einwandfreie Einschicht- oder Decklackformulierungen bei wesentlich verbesserten Korrosionsschutzeigenschaften gestatten.

Die Verbesserung des Korrosionsschutzes ist ein wichtiges Ziel bei der Entwicklung neuer Lacksysteme, wobei bei Einschicht- und Decklacken, wie auch bei Füllern und Grundierungen, der Beständigkeit gegen die Einwirkung von Wasser eine zentrale Bedeutung zukommt. Die Frage der Schutzwirkung einer Lackierung kann in der Praxis nur unter Beachtung einer Reihe von zusätzlichen Bedingungen betrachtet werden. So dürfen durch Maßnahmen zur Verbesserung des Korrosionsschutzes lacktechnische Eigenschaften wie Lagerstabilität und Applizierbarkeit der Lacke oder das Aussehen der Lackierungen und ihr Verhalten bei Verformung nicht verschlechtert werden. Daneben gewinnen in zunehmendem Maße Gesichtspunkte wie Energiebedarf, Lösungsmittelverbrauch und Belastung der Umwelt mit Schadstoffen an Gewicht, was zu den bekannten Forderungen nach Lacken mit tiefer Härtungstemperatur und hohem Trocknungs- bzw. Einbrennrückstand oder der Verwendung von Wasser als Verdünnungsmittel führt. Dabei werden ganz allgemein Einkomponentenlacke bevorzugt.

Die zuletzt genannten Bedingungen erfordern jedoch den Einsatz von Bindemitteln, die für die Herstellung von Lackierungen mit gutem Korrosionsschutz nur begrenzt geeignet sind. So kann z. B. eine tiefe Härtungstemperatur und ein hoher Einbrennrückstand nur über Bindemittel mit einem hohen Gehalt an funktionellen Gruppen und niederem Molekulargewicht erreicht werden. Filme aus solchen Produkten quellen jedoch wegen ihres relativ hohen Gehaltes an extrahierbaren, niedermolekularen Bestandteilen und ihrer hohen Löslichkeitsparameter vergleichsweise stark in Wasser ergeben, somit nur einen begrenzten Korrosionsschutz. In Filmen aus wasserverdünnbaren Bindemitteln bewirken die zur Erreichung der Verdünnbarkeit mit Wasser eingebauten funktionellen Gruppen ebenfalls eine verstärkte Quellbarkeit in wäßrigen Medien.

Phosphorsäure und Polyphosphorsäure, ihre Salze und Phosphorsäuregruppen enthaltende niedermolekulare Derivate, wie saure Ester oder Phosphonsäuren, sowie die Salze dieser Derivate sind für ihre ausgeprägte korrosionshemmende Wirkung bekannt (siehe beispielsweise die Produkte der DE-A-2 144 645).

Die Zugabe dieser Substanzen zu pigmentierten Lacken in Dosierungen, die eine merkliche Verbesserung des Korrosionsschutzes bewirken, führt jedoch zu einer Reihe von gravierenden Störungen, vor allem zu einem vollständigen Verlust des Glanzes und zu einer Verschlechterung der Verformbarkeit der gehärteten Lackfilme. Sie werden daher in der Praxis nur in dem sogenannten »wash-primer« zur Herstellung von matten, korrosionshemmenden und haftungsverbessernden Überzügen mit niederer Schichtstärke verwendet. Fallweise werden Phosphorsäuren oder Phosphorsäurederivate als Härtungskatalysatoren eingesetzt. Die dabei eingesetzten geringen Mengen haben keinen merklichen Einfluß auf die Beständigkeit der vernetzten Lackfilme.

Zur Vermeidung der genannten Schwierigkeiten hat man auch versucht, die Phosphorsäuregruppen in geeignete Polymere chemisch einzubauen. So wird in der DE-OS 22 04 844 und der AT-PS 334 483 u. a. die Umsetzung hydroxylgruppenhältiger Polymerer mit Phosphorpentoxid oder Phosphorsäure beschrieben. Dieses Verfahren ist jedoch aus Verträglichkeitsgründen nur auf Bindemittel anwendbar, die einen hohen Gehalt an polaren und/oder basischen Gruppen besitzen, da nur solche Produkte die an der Oberfläche des Phosphatierungsmittels gebildeten Phosphorsäureester in einem Ausmaße lösen, daß die Reaktion unter Auflösen des Phosphorpentoxids oder der Polyphosphorsäure fortschreiten kann. Es ist daher gerade auf die Bindemitteltypen nicht anwendbar, die wegen ihres relativ hydrophoben Aufbaus für die Herstellung wasserfester Lackierungen besonders interessant sind.

Ebenso ist die Umsetzung von Phosphorsäure mit Epoxidgruppen zwar grundsätzlich zur Einführung von Phosphorsäuregruppen geeignet, die Reaktion verläuft jedoch nicht quantitativ. Es werden daher beispielsweise aus mit $TiO_2$ pigmentierten wärmehärtbaren Alkydharz-Melamin-Harz-Kombinationen bei Mitverwendung von nach der US-PS 4 059 580 oder der JA-PS 7 135 158–R hergestellten Epoxidhar-Phosphorsäure-Umsetzungsprodukten in Mengen, die eine merkliche Verbesserung der Wasserfestigkeit bewirken, matte Filme erhalten.

Der Einbau von Phosphorsäuregruppen durch Copolymerisation von Vinylgruppen enthalten Phosphonsäuren mit anderen äthylenisch ungesättigten Monomeren wird beispielsweise in der DE-AS 1 621 882 beschrieben. Dieses Verfahren hat jedoch den Nachteil, auf eine Substanzklasse beschränkt zu sein und auf relativ schwer zugänglichen und daher teuren Rohstoffen zu basieren. Der quantitative Einbau größeren Anteile an Vinylgruppen enthaltenden Phosphorsäuren bereitet außerdem in der Praxis gewisse Schwierigkeiten.

Das in der JA-PS 75 014 663 beschriebene Verfahren — Umsetzung von Hydroxyalkyl-(meth)-acrylaten mit $P_2O_5$ n und anschließende Copolymerisation mit weiteren äthylenisch ungesättigten Monomeren — ist im Sinne der vorliegenden Aufgabenstellung ungeeignet, da ein Umsetzungspro-

dukt von $P_2O_5$ mit hydroxylgruppenhaltigen Monomeren Phosphorsäureester mit zwei polymerisationsfähigen Gruppen enthält, die bei dem Versuch, die Polymerisation mit hohem Umsatz durchzuführen, Gelbildung bewirken.

Aus der US-A-3 440 201 ist die Herstellung von Umsetzungsprodukten von Melamin-Formaldehyd-Kondensaten mit neutralen Phosphorsäure-Aetherpolyolen, die frei von an das Phosphoratom gebundenen Hydroxygruppen sind, bekannt. Diese dienen zur Herstellung von Klarlacküberzügen auf Holz oder Papier, und sie weisen im Vergleich zu den üblichen Melaminharzbeschichtungen zusätzlich flammwehrende Eigenschaften auf. Beim Einsatz als Bindemittel für Metallackierungen entsprechen diese Produkte infolge ihres Mangels an sauren Gruppen wieder in bezug auf ihre Wasser- bzw. Korrosionsfestigkeit noch in bezug auf die mechanischen Eigenschaften wie Verformbarkeit und Haftfestigkeit den Anforderungen der Praxis.

Ziel der vorliegenden Erfindung war es daher ein Verfahren zu entwickeln, das den Einbau von Phosphorsäuregruppen in für die Herstellung wärmehärtbarer Lacke geeignete Polymere unter maximalem Umsatz der verwendeten Phosphorsäurederivate ermöglicht. Das Verfahren soll, bei Beachtung der dem Fachmann bekannten Verträglichkeitsprobleme, auf alle bekannten Bindemitteltypen anwendbar sein und leicht zugängliche, preisgünstige Rohstoffe verwenden.

Gegenstand der vorliegenden Erfindung ist daher ein Verfahren zur Herstellung von chemisch gebundene saure Phosphorsäurederivate enthaltenden Bindemittel für wärmehärtbare Einkomponentenlacke, das dadurch gekennzeichnet, daß man

(a) ein Amino-Aldehyd-Kondensationsprodukt, dessen Methylolgruppen mit niedrigen Alkoholen veräthert sind, und

(b) ein saures Phosphorderivat, welches ein Phosphorsäurederivat der allgemeinen Formel I

$$P(O)R_x(OH)_y \qquad (I)$$

und oder ein Derivat einer Polyphosphorsäure der allgemeinen Formel II

$$[P(O)R_x(OH)_{y-z}O_{0,5\,z}]n \qquad (II)$$

ist, wobei in den Formeln I und II:

R organische Reste bezeichnen, welche über C−P oder C−O−P-Bindungen mit dem Phosphoratom verbunden sind, und welche je Molekül des sauren Phosphorsäurederivates mindestens eine gegenüber dem Amino-Aldehyd-Kondensationsprodukt (a) funktionelle Gruppe enthalten,
x eine eine Zahl kleiner als 3 ist,
$x+y=3$ bedeutet,

und in den Derivaten der Polyphosphorsäure der Formel II ferner

z die Zahl der von einem Phosphoratom ausgehenden P−O−P-Bindungen bedeutet, welche Werte kleiner als y annehmen muß, und
n den den Polymerisationsgrad bedeutet,

bei einer Temperatur von 50 bis 150°C bis zur praktisch vollständigen Bindung der Phosphorsäurederivate, bzw. Polyphosphorsäurederivate, umsetzt, und

(c) das das erhaltene Reaktionsprodukt mit einer Hydroxylgruppen tragenden Verbindung vermischt.

Als Ausgangsmaterialien für die erfindungsgemäß hergestellten Bindemittel dienen Amino-Aldehyd-Kondensationsprodukte (a), wie die bekannten Melamin-, Benzoguanamin- und Harnstoffharze. Als Aldehyd wird üblicherweise Formaldehyd zur Kondensation herangezogen. Zur besseren Kontrollierbarkeit der Reaktion mit dem Phosphorsäurederivat (b) werden bevorzugt weitgehend oder vollständig verätherte Kondensationsprodukte herangezogen. Als Verätherungsmittel sind üblicherweise niedere Alkohole mit 1 bis 4 C-Atomen eingesetzt.

Die organischen Reste R können aus Alkyl-, Cycloalkyl- oder Arylgruppen aufgebaut sein und Gruppierungen wie

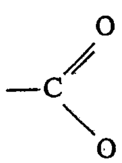   —O—   —C=C—   —C≡C—   —S—   —N

oder

heterocyclische Reste enthalten.

Als gegenüber dem Amino-Aldehyd-Kondensationsprodukt reaktive funktionelle Gruppen werden bevorzugt Hydroxyl-, Amino-, Carboxyl- oder Säureamidgruppen eingesetzt.

Die bei der Durchführung des erfindungsgemäßen Verfahrens als Komponente (b) eingesetzten Phosphorsäurederivate der Formel I bzw. Polyphosphorsäurederivate der Formel II müssen an das Phosphoratom gebundene Hydroxylgruppen aufweisen, weil y und y−z, wie bereits erwähnt, größer als 0 sein müssen. Es handelt sich also um saure Phosphorsäurederivate, bei denen noch freie Säuregruppierungen der Phosphorsäure bzw. Polyphosphorsäure vorhanden sind.

In diesen Phosphorsäurederivaten muß der Rest R ein organischer Rest sein, und speziell bevorzugt sind solche Phosphorsäurederivate bzw. Polyphosphorsäurederivate der Formel I bzw. II, in welchen der Substituent R eine der folgenden Gruppen:

$-(CH_2)_n-OH$;
$-(CH_2)_n-NH_2$;
$-(CH_2)_nCOOH$ oder
$-(CH_2)_n-CONH(CH_2)_nH$

steht worin

n einen Wert von 1 bis 6 aufweist,

oder eine Gruppe der Formeln:

$-$(Cyclohexyl)$-OH$;
$-$(Cyclohexyl)$-CH_2NH_2$;
$-$(Phenyl)$-OH$;
$-$(Benzyl)$-OH$;
$-DH_2$(Benzyl)$-NH_2$;
$-O-(CH_2)_nOH$;
$-O-CH_2$(Cyclohexyl)$-CH_2OH$;
$-O-$(Phenyl)$-OH$;
$-O-CH_2-$(Phenyl)$-CH_2-OH$; oder
$-O-CH_2C(CH_3)_2-CH_2-OC(O)-C(CH_3)_2-CH_2-OH$

eine der Polyäthylenglycolgruppierung oder eine Gruppierung der Formel:

$-O-(CH_2)_2-S-(CH_2-OH$

ist.

Als Komponente (b) können bei der Durchführung des erfindungsgemäßen Verfahrens auch Gemische verschiedener Phosphorsäure-, bzw. Polyphosphorsäure-derivate eingesetzt werden. Aus Gründen der Verfügbarkeit und daher damit verbundenen niedrigen Kosten werden Gemische bevorzugt, die durch Umsetzung von Di-Phosphorpentoxid oder von Polyphosphorsäuren mit Diolen erhältlich sind.

Die Umsetzung des sauren Phosphorderivates (b) mit dem Amino-Aldehyd-Kondensationsprodukt (a) erfolgt bei Temperaturen von 50 bis 150°C, vorzugsweise bei 50 bis 80°C unter Vakuum. Im allgemeinen ist es vorteilhaft die Reaktion in Gegenwart eines geeigneten Lösungsmittels durchzuführen. Bevorzugt werden dabei Lösungsmittel, die, bei gutem Lösevermögen für das Bindemittel, einen Siedepunkt besitzen, der deutlich über dem des Alkoholes liegt, der zur Verätherung der Methylolgruppen des Aminoharzes benutzt wurde, wie z. B. die Mono- und Diäther des Diäthylenglykols.

Zur Erzielung störungsfreier und bei entsprechender Pigmentierung hochglänzender Lackierungen ist es gemäß der vorliegenden Erfindung entscheidend, daß das saure Phosphorsäurederivat bis zu seiner praktisch vollständigen chemischen Bindung mit dem Aminoharz umgesetzt wird. Da eine direkte Bestimmung der nicht gebundenen Anteile des sauren Phosphorsäurederivates, etwa durch chromatographische Verfahren, schwierig und zeitraubend ist, wird in der Praxis eine Kombination von lacktechnischen und rheologischen Verfahren vorgezogen. Dabei wird in einem Vorversuch festgestellt, bis zu welchem Wert der Grenzviskositätszahl oder einer anderen, bei geeigneter Verdünnung gemessenen Viskosität die Umsetzung zwischen dem sauren Phosphorsäurederivat und dem Aminoharz fortgesetzt werden muß, damit erstmals bei der Weiterverarbeitung dieses Vorproduktes zu einem erfindungsgemäßen Bindemittel, Herstellung eines mit Titandioxid pigmentierten Lackes und thermischer Härtung eine hochglänzende Lackierung erhalten wird. Dies ist in der Regel bei Werten der Grenzviskosität von mindestens 4−5 ml/g (gemessen in Dimethylformamid bei 20°C) der Fall. Bei Erreichen höherer Werte ist zu beachten, daß die einwandfreie Löslichkeit der Kondensationsprodukte nicht überschritten wird.

Als hydroxylgruppenhaltige organische Verbindungen (Komponente 2) können sowohl niedermolekulare Produkte als auch Polymere eingesetzt werden. Sie können neben den OH-Gruppen noch weitere funktionelle Gruppen, wie Carboxylgruppen oder Reste trocknender Fettsäuren enthalten. Typische Beispiele für die niedermolekularen hydroxylgruppenhaltigen organischen Verbindungen sind Diole wie Äthylenglykol, Neopentylglykol, 1,6 Hexandiol, Diäthylenglykol, Polyäthylenglykole, Triole wie Glycerin und Trimethylolpropan oder Ester von Polyolen mit trocknenden Fettsäuren.

Die hydroxylgruppenhaltigen Polymere können nach den bekannten Verfahren der Polykondensation, Polymerisation und Polyaddition hergestellt sein. Typische Vertreter sind Polyester, Polyäther, Polyacrylate usw.

Die erfindungsgemäß hergestellten Bindemittel sind entweder durch die Aminoharz-(Poly)-Phosphorsäure-Kondensate bereits in ausreichendem Maße vernetzungsfähig oder werden zusätzlich mit weiteren Vernetzungskomponenten, wie sie allgemein in Einbrennlacken benutzt werden, kombiniert. Beispielsweise können dafür Aminoharze oder Epoxidharze etc. eingesetzt werden. Der Gehalt an Phosphorsäuregruppen im Bindemittel kann mit Hilfe des erfindungsgemäßen Verfahrens grundsätzlich in weiten Grenzen variiert werden. In der Praxis ist jedoch im allgemeinen ein Bereich zu bevorzugen, der Säurezahlen zwischen 5 und 80 mg KOH/g entspricht. Unterhalb dieses Bereiches ist der günstigste Effekt der Phosphorsäuregruppen auf die korrosionshemmende Wirkung der Lackierung in der Regel gering, oberhalb dieses Bereiches werden meist Störungen bei der Herstellung pigmentierter Lacke beobachtet, die zu einer schlechteren Verformbarkeit oder zu schlechtem Glanz der Lackierungen führen. Bevorzugt wird zur Zeit ein Gehalt an Phosphorsäuregruppen, der Säurezahlen von 10 – 30 mg KOH/g entspricht.

Der Gesamtgehalt an Aminoharzen in dem nach dem erfindungsgemäßen Verfahren hergestellten Bindemittel wird nach lacktechnischen Kriterien bestimmt und liegt in der Regel zwischen 15 und 35 Gew.-%.

Auf Basis der erfindungsgemäß hergestellten Bindemittel können Einbrennlacke hergestellt werden, welche Lackierungen mit ausgezeichneten Eigenschaften, insbesondere bezüglich der Wasserbeständigkeit und Haftfestigkeit, auch bei den sogenannten High-solid-Lacken ergeben. Um eine ausreichende Dissoziation der sauren Phosphorsäuregruppen zu gewährleisten, ist es vorteilhaft, geringe Mengen an Wasser (d. h. etwa 1%, bezogen auf das Bindemittel) dem Lack zuzusetzen.

Die folgenden Beispiele erläutern die Erfindung. Die angegebenen Teile und Prozente sind Gewichtsteile bzw. Gewichtsprozente.

## (A) Zusammensetzung der verwendeten Komponenten

### (A1) (Poly)-Phosphorsäurederivate

P-1: Umsetzungsprodukt aus 71 Teilen $P_4O_{10}$ und 118 Teilen 1,6-Hexandiol.
P-2: Umsetzungsprodukt aus 71 Teilen Polyphosphorsäure (84% $P_4O_{10}$) und 118 Teilen 1,6-Hexandiol.
P-3: Umsetzungsprodukt aus 71 Teilen Polyphosphorsäure (84% $P_4O_{10}$) und 920 Teilen Rizinusöl.
P-4: Umsetzungsprodukt aus 71 Teilen Polyphosphorsäure (84% $P_4O_{10}$) und 344 Teilen des symmetrischen Bis-(2-hydroxypropyl)äthers des 4,4-Diphenylolpropans.
P-5: Umsetzungsprodukt aus 71 Teilen Polyphosphorsäure (84% $P_4O_{10}$) und 826 Teilen OH-4.
P-6: Umsetzungsprodukt aus 236 Teilen Hexandiol mit 71 Teilen $P_4O_{10}$.
P-7: 4-Hydroxybutylphosphonsäure.
P-8: 2-Hydroxyäthylphosphonsäure.
P-9: Reaktionsprodukt aus der Umsetzung von 52 Teilen $H_3PO_4$, 85%ig, mit 200 Teilen eines handelsüblichen Epoxidharzes auf Basis von Bisphenol A (Epoxidäquivalent 182 – 189), 50%ig in Diäthylenglykolmonobutyläther (BDG) hergestellt (Vergleichsbeispiel).

### (A2) Amino-Aldehyd-Kondensationsprodukte

N-1: 70%ige Lösung eines handelsüblichen mit Butanol verätherten Benzoguanamin-Formaldehyd-Harzes in Butanol.
N-2: technisch reines Hexamethoxymethylmelamin.

### (A3) Hydroxylverbindungen

OH-1: 134 Teile Trimethylolpropan, 104 Teile Neopentylglykol, 152 Teile Tetrahydrophthalsäureanhydrid und 158 Teile Isononansäure, bis zu einer Säurezahl unter 2 mg KOH/g verestert.
OH-2: 224 Teile Trimethylolpropan, 148 Teile Phthalsäureanhydrid, 178 Teile p-Tertiärbutylbenzoesäure und 308 Teile Rizinusöl, bis zu einer Säurezahl unter 2 mg KOH/g verestert.
OH-3: 268 Teile Trimethylolpropan, 146 Teile Adipinsäure und 364 Teile p-Tertiärbutylbenzoesäure, bis

zu einer Säurezahl unter 2 mg KOH/g verestert.

OH-4: 244 Teile Trimethylolpropan, 152 Teile Tetrahydrophthalsäureanhydrid, 178 Teile p-Tertiärbutylbenzoesäure und 308 Teile Rizinusöl, bis zu einer Säurezahl unter 2 mg KOH/g verestert.

OH-5: 166 Teile Isophthalsäure, 134 Teile Trimethylolpropan, 136 Teile Pentaerythrit und 380 Teile Rizinenfettsäure, bis zu einer Säurezahl unter 2 mg KOH/g verestert.

OH-6: Handelsübliches, wärmereaktives, fremdvernetzendes Acrylcopolymerisat, 75%ig in einem Kohlenwasserstoff-Lösungsmittel (Siedebereich 160—180°C, Aromatengehalt: 98 Vol.-%, Kauri-Butanolwert ASTM-D-1133:90); Säurezahl 12—18 mg KOH/g; Hydroxylzahl: ca. 120 (Herstellerangaben).

OH-7: Wasserlösliches, ölfreies Alkydharz zur Vernetzung mit wasserlöslichen Melaminharzen; 75%ig in Wasser, neutralisiert; dynamische Viskosität/20°C: 430—885 mPa · s (Herstellerangaben).

## (B) Herstellung der Bindemittel

### Beispiel 1

189 Teile des Gemisches von sauren Phosphorsäureestern P-1 werden mit einer Menge einer Lösung des Benzoguanamin-Formaldehyd-Harzes N-1, die 1290 Teile Trockensubstanz enthält, und 493 Teilen BDG bei 100°C unter Anlegen von Vakuum und Abdestillieren von 410 Teilen Lösungsmittel bis zu einer bei 20°C in Dimethylformamid gemessenen Grenzviskositätszahl von 5,5 ml/g umgesetzt.

Eine Menge des Umsetzungsproduktes, die 360 Teile Trockensubstanz enthält, wurde mit 1020 Teilen der Hydroxylgruppen tragenden Verbindung OH-1 bei Raumtemperatur gemischt oder bei 50—90°C präkondensiert und mit Äthylenglykolmonoäthyläther auf 70% verdünnt. Das erhaltene Bindemittel besaß eine Grenzviskositätszahl von 5,0 ml/g (DMF, 20°C) und eine Säurezahl von 17,6 mg KOH/g.

### Beispiele 2—15

Die Bindemittel wurden wie in Beispiel 1 beschrieben hergestellt. Die Spalten A—H der Tabelle 1 haben dabei folgende Bedeutung (alle Teilangaben bedeuten Gewichtsteile und beziehen sich auf Festsubstanz):

A: saures Phosphorsäurederivat (P1—P9)
B: Amino-Aldehyd-Kondensationsprodukt (N1—N2)
C: Lösungsmittel BDG = Diäthylenglykolmonobutyläther, ADG = Diäthylenglykolmonoäthyläther)
D: Grenzviskositätszahl, gemessen bei 20°C in Dimethylformamid
E: Kondensationsprodukt aus A + B in Gew.-Teilen
F: Hydroxylverbindung (OH1—OH7); (Teile/Type)
G: Grenzviskositätszahl des Bindemittels, gemessen bei 20°C in Dimethylformamid
H: Säurezahl (Festharz) mg KOH/g
(a): E und F bei Raumtemperatur oder mäßig erhöhter Temperatur gemischt.
(b): E und F bei 50—90°C präkondensiert.

Tabelle 1

| | Vorprodukt | | | | Bindemittel | | | |
|---|---|---|---|---|---|---|---|---|
| | A | B | C | D | E | F | G | H |
| 2 | 189 P-1 | 1290 N-1 | 493 BDG | 5,5 | 360 | 1020/1 (a) | 4,0 | 17,3 |
| 3 | 189 P-2 | 1290 N-1 | 493 BDG | 5,3 | 360 | 1020/1 (b) | 4,9 | 17,0 |
| 4 | 189 P-2 | 1290 N-1 | 493 BDG | 5,3 | 360 | 970/2 (b) | 5,1 | 17,1 |
| 5 | 991 P-3 | 488 N-1 | 500 BDG | 5,8 | 360 | 770/3 (a) | 3,9 | 20,9 |
| 6 | 415 P-4 | 1064 N-1 | 456 ADG | 5,2 | 360 | 900/1 (b) | 5,0 | 19,2 |
| 7 | 990 P-5 | 488 N-1 | 493 BDG | 4,7 | 360 | 770/4 (a) | 4,1 | 20,5 |
| 8 | 378 P-2 | 1101 N-1 | 493 BDG | 6,9 | 540 | 890/1 (a) | 4,9 | 45,3 |
| 9 | 378 P-2 | 1101 N-1 | 493 BDG | 6,9 | 600 | 830/1 (b) | 5,3 | 51,2 |
| 10 | 189 P-1 | 1290 N-1 | 493 BDG | 5,3 | 360 | 970/5 (a) | 3,9 | 16,2 |
| 11 | 307 P-6 | 1172 N-2 | 491 BDG | 5,7 | 360 | 970/1 (a) | 3,8 | 16,8 |
| 12 | 77 P-7 | 1400 N-2 | 500 BDG | 5,6 | 360 | 820/4 (b) | 5,0 | 18,1 |
| 13 | 37,8 P-8 | 390 N-1 | 155 BDG | 4,2 | 250 | 980/1 (b) | 4,8 | 13,7 |
| 14 | 378 P-2 | 1101 N-2 | 493 BDG | 6,0 | 285 | 1145/6 (a) | 4,5 | 39,1 |
| 15 | 189 P-2 | 1290 N-2 | 493 BDG | 5,1 | 360 | 927/7 (a) | 3,8 | 46*) |

*) des nichtneutralisierten Harzes.

(C) Herstellung und Prüfung von Lacken aus den erfindungsgemäßen Bindemitteln

Aus den Bindemitteln wurden nach dem üblichen Verfahren Lacke mit folgenden Pigmentierungen hergestellt:

| | Pigmentierung | | |
|---|---|---|---|
| | 1 | 2 | 3 |
| $TiO_2$ | 80 | 50 | 62,5 |
| Blanc fixe | | 50 | 62,5 |
| Talkum | | | 5,0 |
| Ruß | | | 0,1 |
| Gesamtbindemittel fest | 100 | 100 | 100 |
| B/P | 1 : 0,8 | 1 : 1 | 1 : 1,3 |

Die Lacke 1—15 wurden mit einem Lösungsmittelgemisch aus Xylol/Äthylglykolacetat/Butylacetat (5 : 3 : 2) auf 21—23 s DIN 53 211/20°C verdünnt. Vor dem Verdünnen wurden den Lacken 1% (bezogen auf Gesamtbindemittel) Wasser zugesetzt.

Lack 16 wurde mit Dimethyläthanolamin auf einen pH-Wert von 8,0 eingestellt und mit deionisiertem Wasser wie oben eingestellt.

Tabelle 2

| | Lack No. | | | | | | | | | |
|---|---|---|---|---|---|---|---|---|---|---|
| | 1 | 2 | 3 | 4 | 5 | 6 | 7 | 8 | 9 | 10 |
| Bindemittel 2 | 86,1 | | | | | | | | | |
| Bindemittel 3 | | 86,1 | | | | | | | | |
| Bindemittel 4 | | | 93,1 | 93,1 | 93,1 | | | | | |
| Bindemittel 5 | | | | | | 78,4 | | | | |
| Bindemittel 6 | | | | | | | 93,1 | | | |
| Bindemittel 7 | | | | | | | | 83,3 | | |
| Bindemittel 8 | | | | | | | | | 100,0 | |
| Bindemittel 9 | | | | | | | | | | 100,0 |
| HMMM | 13,9 | 13,9 | 6,9 | 6,9 | 6,9 | 21,6 | 26,9 | 16,7 | – | – |
| Pigmentierung | 1 | 1 | 1 | 2 | 3 | 1 | 2 | 3 | 1 | 1 |
| p-Toluolsulfonsäure | 0,3 | 0,3 | 0,3 | 0,3 | 0,3 | – | 1,0 | 0,3 | – | – |
| Pendelhärte, s, DIN 53 157/5 eingebrannt | | | | | | | | | | |
| 30 min 130°C | 119 | 110 | 132 | 137 | 135 | 72 | 122 | 106 | 80 | 95 |
| 30 min 150°C | 136 | 123 | 139 | 145 | 143 | 88 | 128 | 113 | 89 | 102 |
| Tiefung, mm, DIN 53 156 | | | | | | | | | | |
| 30 min 130°C | 5,6 | 6,0 | 5,2 | 4,8 | 5,5 | 5,9 | 4,5 | 5,5 | 4,2 | 3,5 |
| 30 min 150°C | 4,7 | 5,2 | 5,0 | 4,5 | 4,8 | 4,7 | 4,0 | 5,5 | 4,0 | 3,3 |
| Glanz (Lange) | bei Pigmentierung 1 immer über 100% | | | | | | | | | |
| Wassertest | nach 100 Stunden kein Angriff | | | | | | | | | |
| Einbrennrückstand bei 21–23 s, DIN 53 211/20°C 30 min/150°C | | | | | | 73% | 71% | 71,5% | | |

Tabelle 2 (Fortsetzung)

| | Lack No. 11 | 12 | 13 | 14 | 15 | 16 |
|---|---|---|---|---|---|---|
| Bindemittel 10 | 93,1 | | | | | |
| Bindemittel 11 | | 93,1 | | | | |
| Bindemittel 12 | | | 82,6 | | | |
| Bindemittel 13 | | | | 86,1 | 100 | |
| Bindemittel 15 | | | | | | 93,1 |
| HMMM | 6,9 | 6,9 | 17,4 N-2 | 13,9 | – | 6,9 N-2 |
| Pigmentierung | 2 | 1 | 3 | 2 | 1 | 1 |
| p-Toluolsulfonsäure | 0,3 | 0,3 | 0,3 | 0,3 | 0,3 | – |
| Pendelhärte, s, DIN 53 157/5 eingebrannt | | | | | | |
| 30 min/130°C | 116 | 89 | 114 | 120 | 130 | |
| 30 min/150°C | 113 | 112 | 126 | 136 | 135 | 145 |
| Tiefung, mm, DIN 53 156 | | | | | | |
| 30 min/130°C | 4,7 | 4,5 | 5,3 | 4,6 | 4,5 | 4,8 |
| 30 min/150°C | 4,5 | 3,2 | 5,0 | 3,7 | 4,0 | 4,5 |
| Glanz (Lange) | bei Pigmentierung 1 immer über 100% | | | | | |
| Wassertest 40° | nach 100 Stunden kein Angriff | | | | | |
| Einbrennrückstand (S. V.) | 72% | 71,4% | | 72,5% | | |

## (D) Vergleichsbeispiele zum Stand der Technik

### Vergleichsbeispiel 1 – 8

Kombination von Hydroxylgruppen tragenden Verbindungen OH-1 und OH-5 mit den Aminoharzen N-1 und N-2 in den Mischungsverhältnissen 70 : 30 und 80 : 20 (bezogen auf die lösungsmittelfreien Komponenten) wurden in der Pigmentierung 1 unter Zugabe von 1% p-Toluolsulfonsäure (bezogen auf die lösungsmittelfreie Harzkombination) in der bei den Lacken 1 – 15 beschriebenen Weise geprüft. Dabei wurden in bezug auf Filmhärte und Verformbarkeit ähnliche Werte wie bei den Lacken 1 – 15 erhalten, im Wassertest bei 40° C trat jedoch schon nach 16 Stunden ein Blasengrad von m 5/g 1 oder stärker auf.

### Vergleichsbeispiel 9 – 15

Zu Lacken auf Basis von OH-1 zbd N-2 (Mischungsverhältnis 75 : 25) in der Pigmentierung 1 wurden vor dem Verdünnen je 100 Teile Bindemittel folgender Zugaben gemacht:

| | |
|---|---|
| $H_3PO_4$ (1 M in Butanol): | 7,1 Teile |
| Hydroxyäthylphosphorsäure (20%ig in Butanol): | 8,7 Teile |
| P-9 (50%ig in Butyldiglykol): | 13,2 Teile |

100%iges handelsübliches Epoxidharz auf Basis Bisphenol A (Epoxidäquivalent 182 – 189): 6,6 Teile

Die Phosphorverbindungen enthaltenden Lacke wurden unter Zugabe von p-Toluolsulfonsäure (1% des Festharzanteiles) bei 130°C, ohne Katalysatorzugabe bei 150°C, während 30 Minuten gehärtet. Dabei wurden in allen Fällen matte Lackierungen erhalten. Der phosphorfreie Lack ergab bei Zugabe von p-Toluolsulfonsäure und Härtung bei 160°C eine hochglänzende Lackierung.

## Patentansprüche

1. Verfahren zur Herstellung von chemisch gebundene saure Phosphorsäurederivate enthaltenden Bindemittel für wärmehärtbare Einkomponentenlacke, dadurch gekennzeichnet, daß man

(a) ein Amino-Aldehyd-Kondensationsprodukt, dessen Methylolgruppen mit niedrigen Alkoholen veräthert sind, und
(b) ein saures Phosphorderivat und ein Phosphorsäurederivat der allgemeinen Formel I

$$P(O)R_x(OH)_y \quad (I)$$

und oder ein Derivat einer Polyphosphorsäure der allgemeinen Formel II

$$[P(O)R_x(OH)_{y-z}O_{0,5z}]n \quad (II)$$

ist, wobei in den Formeln I und II:

R organische Reste bezeichnen, welche über C – P oder C – O – P-Bindungen mit dem Phosphoratom verbunden sind und welche je Molekül des sauren Phosphorsäurederivates mindestens eine gegenüber dem Amino-Aldehyd-Kondensationsprodukt (a) funktionelle Gruppe enthalten,
x eine Zahl kleiner als 3 ist, und
$x+y=3$ bedeutet,

und in den Derivaten der Polyphosphorsäure der Formel II ferner

z die Zahl der von einem Phosphoratom ausgehenden P – O – P-Bindungen bedeutet, welche Werte kleiner als y annehmen muß, und
n den Polymerisationsgrad bedeutet,

bei einer Temperatur von 50 bis 150°C bis zur vollständigen Bindung der Phosphorsäurederivate, bzw. Polyphosphorsäurederivate, umsetzt, und
(c) das erhaltene Reaktionsprodukt mit einer Hydroxylgruppen tragenden Verbindung vermischt.

2. Verfahren nach Anspruch 1, dadurch gekennzeichnet, daß man die Umsetzung von (a) und (b) bei einer Temperatur von 50 bis 80°C im Vakuum, gegebenenfalls in Gegenwart von Lösungsmitteln, durchführt.

3. Verfahren nach Anspruch 1 oder 2, dadurch gekennzeichnet, daß bei der Vermischung mit der Hydroxylgruppen tragenden Verbindung (c) eine Reaktion zwischen dem Reaktionsprodukt aus (a) + (b) und der Hydroxylgruppen tragenden Verbindung (c) stattfindet.

4. Verfahren nach einem der Ansprüche 1 bis 3, dadurch gekennzeichnet, daß in den sauren Phosphorsäure- bzw. Polyphosphorsäure-derivaten der Formel I bzw. II der Substituent R für eine der folgenden Gruppierungen:

$-(CH_2)_n-OH$;
$-(CH_2)_n-NH_2$;
$-(CH_2)_nCOOH$; oder
$-(CH_2)_n-CONH\,(CH_2)_n-CONH\,(CH_2)_nH$;

steht worin

n einen Wert von 1 bis 6 aufweist,

oder eine Gruppe der Formeln:
– (Cyclohexyl) – OH;
– (Cyclohexyl) – $CH_2NH_2$;

$-(Phenyl)-OH;$
$-(Benzyl)-OH;$
$-CH_2(Benzyl)-NH_2;$
$-O-(CH_2)_nOH;$
$-O-CH_2(Cyclohexyl)-CH_2OH;$
$-(Phenyl)-OH;$
$-O-CH_2-(Phenyl)-CH_2-OH;$ oder
$-O-CH_2-C(CH_3)_2-CH_2-OC(O)-C(CH_3)_2-CH_2-OH$

eine Polyäthylenglycolgruppierung oder eine Gruppierung der Formel:

$$-O-(CH_2)_2-S-(CH_2)_2-OH$$

ist.

5. Verfahren nach einem der Ansprüche 1 bis 4, dadurch gekennzeichnet, daß die verwendete Komponente (b) ein Reaktionsprodukt aus Di-Phosphorpentoxid oder Polyphosphorsäuren und Diolen ist.

6. Verfahren nach einem der Ansprüche 1 bis 5, dadurch gekennzeichnet, daß man die Kondensation zwischen den Komponenten (a) und (b) bis zu einer Grenzviskosität von mindestens 4 ml/g (gemessen in Dimethylformamid) durchführt, ohne daß der Zustand der üblichen Löslichkeit überschritten wird.

7. Verfahren nach einem der Ansprüche 1 bis 6, dadurch gekennzeichnet, daß man die Phosphorsäurederivate der Formal I bzw. die Polyphosphorsäurederivate der Formel II in einer solchen Menge einsetzt, daß das erhaltene Bindemittel ei eine Säurezahl im Bereich von 5 bis 80, vorzugsweise im Bereich von 10 bis 30 mg KOH/g, aufweist.

8. Verfahren nach einem der Ansprüche 1 bis 7, dadurch gekennzeichnet, daß man das erhaltene Bindemittel mit üblichen Vernetzungskomponenten (d) kombiniert.

9. Verfahren nach einem der Ansprüche 1 bis 8, dadurch gekennzeichnet, daß man die Komponente (a) in einer Gesamtmenge von 15 bis 35 Gew.-%, bezogen auf das Gewicht der Komponenten (a), (b) (c) und (d), einsetzt.

**Claims**

1. Process for producing binders for heat-hardenable onecomponent paints containing chemically bound acidic phosphoric acid derivatives, characterized in that

(a) an amine-aldehyde condensation product, the methylol gruops of which are substantially or totally etherified with ow alcohols, and
(b) an acidic phosphor derivative and a phosphoric acid derivative of the general formula I

$$P(O)R_x(OH)_y \quad (I)$$

and/or a polyphosphoric acid of the general formula II

$$[P(O)R_x(OH)_{y-z}O_{0.5\,z}]n \quad (II)$$

the radical

R in the formulae (I) and (II) meaning an organic radical which is linked to the phosphor atom over C–P oder C–O–P links and which, per molecule of the acidic phosphoric acid derivative contain at least one group functional towards the amine-aldehyde condensation product (a),
x ist a number smaller than 3,
y is a number greater than 0, and
x+y ist 3,

and, in the derivatives of the polyphosphoric acid of formula II,

z ist the number of P–O–P links coming from one phosphor atom, and which must be smaller than y, and
n ist the degree of polymerisation,

are reacted at a temperature of from 50 to 150°C, until the phosphoric acid derivatives and the polyphosphoric acid derivatives are totally linked, and
(c) the obtained reaction product is mixed with a compound carrying hydroxy groups.

2. Process according to claim 1, characterized in that the reaction between (a) and (b) is carried out under vacuum, at a temperature of from 50 to 80° C, optionally in the presence of solvents.

3. Process according to claim 1 or 2, characterized in that upon mixing with the hydroxy group containing compound (c) a reaction takes place between the reaction product of (a) and (b) and the hydroxy group containing compound (c).

4. Process according to one of claims 1 to 3, characterized in that in the acidic phosphoric acid and polyphosphoric acid derivatives of formula I and II the radical R stands for one of the following groups

$-(CH_2)_n-OH$; $-(CH_2)_n-NH_2$;
$-(CH_2)_nCOOH$;

or

$-(CH_2)-CONH(CH_2)_{n},H$

wherein

n ist a figure of from 1 to 6, or a group of the formulae

$-(Cyclohexyl)-OH$;
$-(cyclohexyl)-CH_2NH_2$;
$-(phenyl)-OH$;
$-(benzyl)-OH$;
$-CH_2(benzyl)-NH_2$,
$-O-(CH_2)_nOH$;
$-O-CH_2(cyclohexyl)-CH_2OH$;
$-O-(phenyl)-OH$;
$-O-CH_2(phenyl)-CH_2-OH$; or
$-O-CH_2-C(CH_3)_2-CH_2-OC(O)-C(CH_3)_2-CH_2-OH$

a polyethylene glycol group, or a group of the formula

$-O-(CH_2)_2-S-(CH_2)_2-OH$.

5. Process according to any one of claims 1 to 4, characterized in that the used component (b) is a reaction product of di-phosphorpentoxide or polyphosphoric acids with diols.

6. Process according to any one of claims 1 to 5, characterized in that the condensation between components (a) and (b) is carried to an intrinsic viscosity of at least 4 ml/g (measured i in dimethylformamide), without surpassing the state of solubility.

7. Process according to any one of claims 1 to 6, characterized in that the phosphoric acid dertivatives of formula I and the polyphosphoric acid derivatives of formula II are used in a quatity such that the obtained binder has an acid value within the range of from 5 to 80, preferably of from 10 to 30 mg KOH/g.

8. Process according to any one of claims 1 to 7, characterized in that the obtained binder is combined with normal crosslinking components (d).

9. Process according to any one of claims 1 to 8, characterizid in that component (a) is used in a total quantity of from 15 to 35% by weight, calculated on the weight of components (a), (b), (c) and (d).

**Revendications**

1. Procédé de préparation de liants contenant des dérivés acides de l'acide phosphorique chimiquement combinés, pour vernis thermodurcissables à un composant, caractérisé en ce que:

a) on fait réagir un produit de condensation amino-aldéhydique dont les groupes méthylols sont éthérifiés complètement ou pratiquement complètement par des alcools inférieurs, et
b) un dérivé acide du phosphore et un dérivé de l'acide phosphorique de formule générale (I):

$$P(O)R_x(OH)_y \qquad (I)$$

et/ou un dérivé d'un acide polyphosphorique de formule générale (II):

$$[P(O)R_x(OH)_{y-z}O_{0,5\,z}]n \qquad (II)$$

les symboles des formules (I) et (II) ayant les significations suivantes:

R représente des radicaux organiques reliés à l'atome de phosphore par des liaisons C–P ou

C–O–P et qui contiennent au moins un groupe fonctionnel à l'égard du produit de condensation amino-aldéhydique (a) par molécule du dérivé acide de l'acide phosphorique;
x est un nombre inférieur à 3;
$x+y=3$;
et en outre, dans les dérivés de l'acide polyphosphorique de formule (II):

z est le nombre des liaisons P–O–P partant d'un atome de phosphore, qui doit avoir des valeurs inférieures à y, et
n est le degré de polymérisation;

à une température de 50 à 150° C jusqu'à fixation complète des dérivés de l'acide phosphorique ou respektivement des dérivés de l'acide polyphosphorique et
c) on mélange le produit de réaktion obtenu avec un composé portant des groupes hydroxy.

2. Procédé selon la revendication 1, caractérisé en ce que l'on effectue la réaction entre (a) et (b) à une température de 50 à 80° C sous vide, éventuellement en présence de solvants.
3. Procédé selon la revendication 1 ou 2, caractérisé en ce que, au mélange avec le composé (c) portant des groupes hydroxy, il se produit une réaction entre le produit de réaction de (a)+(b) et le composé (c) portant des groupes hydroxy.
4. Procédé selon l'une des revendications 1 à 3, caractérisé en ce que, dans les dérivés acides de l'acide phosphorique ou de l'acide polyphosphorique de formules respektives (I) et (II), le symbole R représente l'un des groupements suivants:

$-(CH_2)_n-OH$,
$-(CH_2)_n-NH_2$,
$-(CH_2)_nCOOH$, ou
$-(CH_2)_n-CONH(CH_2)_nH$,

dans lesquels:

n a une valeur de 1 à 6,

ou un groupe répondant à l'une des formules suivantes:

–(cyclohexyl)–OH,
–(cyclohexyl)–$CH_2NH_2$,
–(phényl)–OH,
–(benzyl)–OH,
–$CH_2$(benzyl)–$NH_2$,
$-O-(CH_2)_nOH$,
–O–$CH_2$(cyclohexyl)–$CH_2OH$,
–O–(phényl)–OH,
–O–$CH_2$–(phényl)–$CH_2$–OH, ou
$-O-CH_2-C(CH_3)_2-CH_2-OC(O)-C(CH_3)_2-CH_2-OH$,

ùn groupement polyéthyléne glycol ou un groupement de formule:

$-O-(CH_2)_2-S-(CH_2)_2-OH$

5. Procédé selon l'une des revendications 1 à 4, caractérisé en ce que le composant (b) utilisé est un produit de réaction du pentoxyde de diphosphore ou d'acides polyphosphoriques et de diols.
6. Procédé selon l'une quelconque des revendications 1 à 5, caractérisé en ce que l'on effectue la condensation entre les composants (a) et (b) jusqu'à une viscosité limite d'au moins 4 ml/g (mesurée dans le diméthylformamide) sans dépasser l'etat de solubilité.
7. Procédé selon l'une des revendications 1 à 6, caractérisé en ce que l'on utilise les dérivés de l'acide phosphorique de formule (I) ou les dérivés de l'acide polyphosphorique de formule (II) en quantité telle que le liant obtenu présente un indice d'acide dans l'intervalle des 5 à 80, de préférence dans l'intervalle de 10 à 30 mg de KOH/g.
8. Procédé selon l'une des revendications 1 à 7, caractérisé en ce que l'on combine le liant obtenu avec des composants réticulants usuels (d).
9. Procédé selon l'une des revendications 1 à 8, caractérisé en ce que l'on utilise le composant (a) en quantité totale de 15 à 35% en poids, par rapport au poids des composants (a), (b), (c) et (d).